# EUROPEAN PATENT APPLICATION

(11) **EP 4 435 642 A1**
(43) Date of publication of application: **25.09.2024**
(21) Application number: 23194810.0
(22) Date of filing: 01.09.2023
(51) Int. Cl.: G06F 21/32, H04L 9/32

(54) **BIOMETRIC AUTHENTICATION SYSTEM, BIOMETRIC AUTHENTICATION DEVICE, AND BIOMETRIC AUTHENTICATION METHOD**

(30) Priority: 22.03.2023 JP 2023045893
(71) Applicant: Kabushiki Kaisha Toshiba, Minato-ku Tokyo (JP); Toshiba Energy Systems & Solutions Corporation, Saiwai-ku Kawasaki-shi Kanagawa (JP)
(72) Inventor: SUZUKI, Nobuaki, Tokyo (JP); KOMANO, Yuichi, Tokyo (JP); FUKUDA, Aki, Kawasaki-shi (JP)
(74) Representative: Marks & Clerk LLP

(57) **Abstract**

According to one approach, a biometric authentication system includes a biometric authentication device and an information processing device. The biometric authentication device includes a first secure element configured to store data related to biometric information and data related to a first security level, and a first authenticator configured to perform authentication of a user based on the biometric information and perform authentication of the information processing device based on a second security level. The information processing device includes a second secure element configured to store data related to the second security level, and a second authenticator configured to perform authentication of the biometric authentication device based on the first security level.

## Description

### FIELD

Approaches described herein relate to a biometric authentication system, a biometric authentication device, and a biometric authentication method.

### BACKGROUND

It has been common that individuals always bring a device (biometric authentication device) having a biometric authentication function, such as a smartphone or security card having a fingerprint authentication function. Thus, when a user attempts to use an information processing device, only a user having valid authority can be allowed to use the information processing device by performing mutual authentication between the information processing device and a biometric authentication device brought with the user.

In this case, the biometric authentication device and the information processing device each need to determine whether or not a security level guaranteed by the counterpart device satisfies a standard requested by the own device. Thus, the biometric authentication device and the information processing device each need to perform mutual authentication with taken into account the security level of the counterpart device.

### BRIEF DESCRIPTION OF THE DRAWINGS

FIG. 1 is a diagram illustrating the configuration of a biometric authentication system according to Approach 1;
FIG. 2 is a flowchart for detailed description of processing by the biometric authentication system according to Approach 1;
FIG. 3 is a diagram illustrating the configuration of a biometric authentication system according to Approach 2;
FIG. 4 is a flowchart for detailed description of processing by the biometric authentication system according to Approach 2;
FIG. 5 is a flowchart for detailed description of processing by the biometric authentication system according to Approach 2;
FIG. 6 is a flowchart for detailed description of processing by the biometric authentication system according to Approach 2;
FIG. 7 is a diagram illustrating the configuration of a biometric authentication system according to Approach 3;
FIG. 8 is a flowchart for detailed description of processing by the biometric authentication system according to Approach 3;
FIG. 9 is a flowchart for detailed description of processing by the biometric authentication system according to Approach 3;
FIG. 10 is a diagram illustrating the configuration of a biometric authentication system according to Approach 4;
FIG. 11 is a flowchart for detailed description of processing by the biometric authentication system according to Approach 4;
FIG. 12 is a flowchart for detailed description of processing by the biometric authentication system according to Approach 4; and
FIG. 13 is a flowchart for detailed description of processing by the biometric authentication system according to Approach 4.

### DETAILED DESCRIPTION

According to one approach, a biometric authentication system includes a biometric authentication device and an information processing device.

The biometric authentication device includes
a first memory comprising a first secure element configured to store data related to biometric information and data related to a first security level,
a first processing circuitry comprising
   a biometric information acquirer configured to read the data related to the biometric information from the first secure element and acquire the biometric information based on the data related to the biometric information,
   a first security level acquirer configured to read the data related to the first security level from the first secure element and acquire the first security level based on the data related to the first security level,
   a first communicator configured to transmit the first security level to the information processing device and receive a second security level from the information processing device, and
   a first authenticator configured to perform authentication of a user based on the biometric information and perform authentication of the information processing device based on the second security level.

The information processing device includes
a second memory comprising a second secure element configured to store data related to the second security level,
a second processing circuitry comprising
   a second security level acquirer configured to read the data related to the second security level from the second secure element and acquire the second security level based on the data related to the second security level,
   a second communicator configured to transmit the second security level to the biometric authentication device and receive the first security level from the biometric authentication device, and
   a second authenticator configured to perform authentication of the biometric authentication device based on the first security level.

A biometric authentication device includes a memory and a processing circuitry.

The memory includes a first secure element configured to store data related to biometric information and data related to a first security level.

The processing circuitry includes a biometric information acquirer configured to read the data related to the biometric information from the first secure element and acquire the biometric information based on the data related to the biometric information;
a first security level acquirer configured to read the data related to the first security level from the first secure element and acquire the first security level based on the data related to the first security level;
a first communicator configured to transmit the first security level to information processing device and receive a second security level from the information processing device; and
a first authenticator configured to perform authentication of a user based on the biometric information and perform authentication of the information processing device based on the second security level.

According to one approach, a biometric authentication method includes:
reading data related to biometric information from a first secure element and acquiring the biometric information based on the data related to the biometric information;
reading data related to a first security level from the first secure element and acquiring the first security level based on the data related to the first security level;
transmitting the first security level to an information processing device;
receiving a second security level from the information processing device;
performing authentication of a user based on the biometric information; and
performing authentication of the information processing device based on the second security level.

Approaches of the present invention will be described below with reference to the accompanying drawings. Any identical or corresponding elements in the drawings is denoted by the same reference sign and detailed description thereof is omitted as appropriate.

### Approach 1

### Biometric authentication system

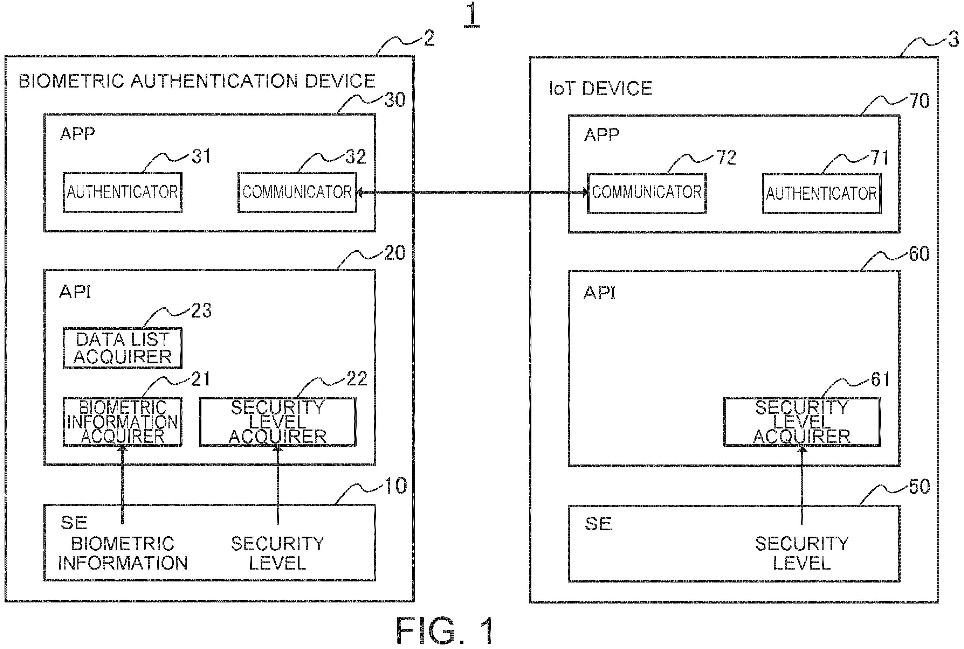

FIG. 1 is a diagram illustrating the configuration of a biometric authentication system 1 according to Approach 1. The biometric authentication system 1 includes a biometric authentication device 2 and an IoT device 3. The biometric authentication device 2 is, for example, a security card, smartphone, or dedicated device having a function to acquire biometric information of a user. The biometric information of the user is characteristic data extracted from, for example, the fingerprint, face, iris, vein, or voice of the user. The IoT device 3 is, for example, a working machine installed in a factory. However, the applicable range of a technology according to Approach 1 is not limited thereto.

### Biometric authentication device

The biometric authentication device 2 includes a secure element (SE) 10, an application programmable interface (API) layer 20, and an application (APP) layer 30. The biometric authentication device 2 also includes a non-illustrated communication interface. The communication scheme of the communication interface is, for example, a wired LAN, a wireless LAN, WiFi (registered trademark), near-filed communication (NFC), Bluetooth (registered trademark), or ZigBee (registered trademark).

The SE 10 is a device having a function to encrypt and store important information in a hardware manner and is, for example, a trusted platform module (TPM) mounted on a smartphone or the like, or a security chip mounted on an IC card or the like. The SE 10 may be entirely configured as hardware such as a processing circuitry and/or a memory or may be partially configured as software.

The SE 10 stores data related to various kinds of important information such as the biometric information of the user, the role of the user, the kind of a biometric authentication function of the biometric authentication device 2, and the security level of the biometric authentication device 2. As described above, the biometric information of the user is characteristic data extracted from, for example, the fingerprint, face, iris, vein, or voice of the user. The role of the user is, for example, 0: no information, 1: general user, or 2: management user. The kind of the biometric authentication function is, for example, 0: no biometric authentication function, 1: fingerprint authentication, 2: face authentication, 3: iris authentication, 4: vein authentication, or 5: voice authentication. The security level is, for example, 0: not supported, 1: Low, 2: Middle, or 3: High.

For example, in a case of the biometric information, data related to the biometric information of the user is encrypted and stored in a hardware manner in the SE 10. The data related to the biometric information may be the biometric information itself or may be a private key for decrypting biometric information encrypted and stored at a place other than the SE 10 in the biometric authentication device 2.

Similarly, in a case of the security level, data related to the security level of the biometric authentication device 2 is encrypted and stored in a hardware manner in the SE 10. The data related to the security level may be the security level itself or may be a private key for decrypting a security level encrypted and stored at a place other than the SE 10 in the biometric authentication device 2.

The API layer 20 includes a biometric information acquirer 21, a security level acquirer 22, and a data list acquirer 23. These APIs are defined and implemented as, for example, methods, functions, or procedures in a typical programing language such as Java, Objective-C, C#, C++, or C. These APIs can be called and used by modules of the APP layer 30 to be described later. These APIs or the API layer 20 may be entirely implemented by software or may be partially or entirely implemented by hardware such as a processing circuitry and/or a memory.

The biometric information acquirer 21 reads the data related to the biometric information and stored in the SE 10 and acquires the biometric information of the user based on the data related to the biometric information. For example, when the data related to the biometric information is the biometric information itself, the biometric information acquirer 21 can directly acquire the data read from the SE 10 as the biometric information of the user. When the data related to the biometric information is a private key for decrypting biometric information encrypted and stored at another place, the biometric information acquirer 21 can acquire the biometric information of the user by decrypting the encrypted biometric information by using the private key read from the SE 10.

The security level acquirer 22 reads the data related to the security level and stored in the SE 10 and acquires the security level of the biometric authentication device 2 based on the data related to the security level. For example, when the data related to the security level is the security level itself, the security level acquirer 22 can directly acquire the data read from the SE 10 as the security level of the biometric authentication device 2. When the data related to the security level is a private key for decrypting a security level encrypted and stored at another place, the security level acquirer 22 can acquire the security level of the biometric authentication device 2 by decrypting the encrypted security level by using the private key read from the SE 10.

The data list acquirer 23 acquires a list of data stored in the SE 10.

The APP layer 30 includes an authenticator 31 and a communicator 32. These modules are written and implemented in a typical programing language. These modules can call and use APIs included in the API layer 20. These modules may be entirely implemented by software or may be partially or entirely implemented by hardware such as a processing circuitry and/or a memory.

The authenticator 31 performs authentication of the user based on the biometric information and performs authentication of the IoT device 3 based on a security level received from the IoT device 3. The communicator 32 transmits and receives various kinds of data to and from the IoT device 3 through a non-illustrated communication interface. In Approach 1, the communicator 32 is included in the APP layer 30, but alternatively, the communicator 32 may be included in the API layer 20.

### IoT device

The IoT device 3 includes a secure element (SE) 50, an API layer 60, and an APP layer 70. The IoT device 3 also includes a non-illustrated communication interface. The communication scheme of the communication interface corresponds to the communication scheme of the communication interface of the biometric authentication device 2 described above.

The SE 50 is a device having a function to encrypt and store important information in a hardware manner and is, for example, a TPM or a security chip. The SE 50 may be entirely configured as hardware such as a processing circuitry and/or a memory or may be partially configured as software. The SE 50 of the IoT device 3 and the SE 10 of the biometric authentication device 2 may have identical specifications or different specifications.

Data related to the security level of the IoT device 3 is encrypted and stored in a hardware manner in the SE 50. The data related to the security level may be the security level itself or may be a private key for decrypting a security level encrypted and stored at a place other than the SE 50 in the IoT device 3.

The API layer 60 includes a security level acquirer 61. The security level acquirer 61 reads the data related to the security level and stored in the SE 50 and acquires the security level of the IoT device 3 based on the data related to the security level. The API layer 60 may be entirely implemented by software or may be partially or entirely implemented by hardware such as a processing circuitry and/or a memory.

The APP layer 70 includes an authenticator 71 and a communicator 72. These modules are written and implemented in a typical programing language. These modules can call and use APIs included in the API layer 60. These modules may be entirely implemented by software or may be partially or entirely implemented by hardware such as a processing circuitry and/or a memory.

The authenticator 71 performs authentication of the biometric authentication device 2 based on a security level received from the biometric authentication device 2. The communicator 72 transmits and receives various kinds of data to and from the biometric authentication device 2 through a non-illustrated communication interface. In Approach 1, the communicator 72 is included in the APP layer 70, but alternatively, the communicator 72 may be included in the API layer 60.

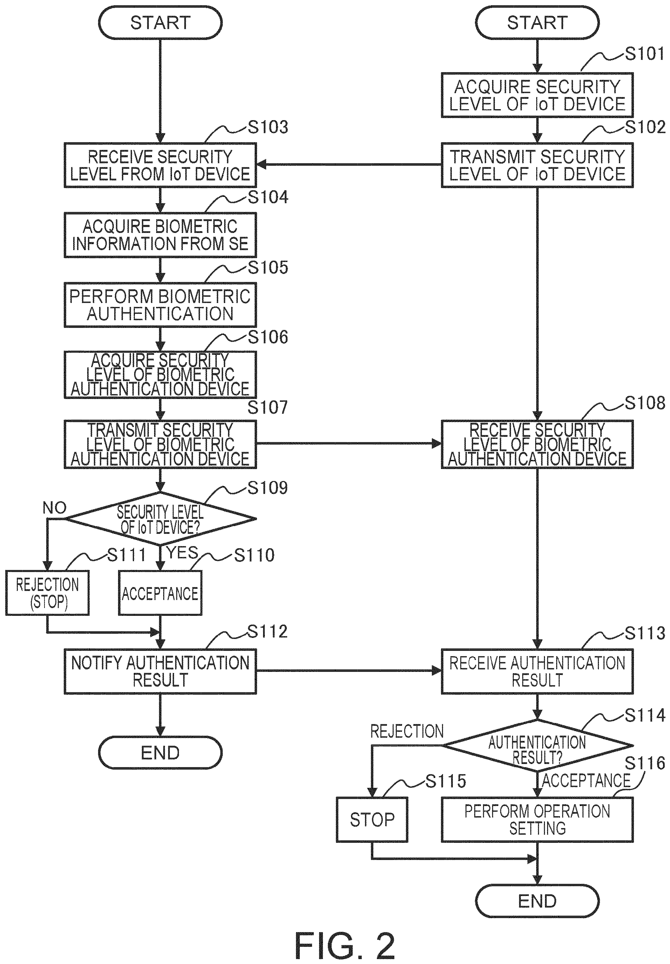

Details of authentication processing by the biometric authentication system 1 according to Approach 1 will be described below with reference to a flowchart in FIG. 2.

At step S101, the authenticator 71 of the IoT device 3 acquires the security level of the IoT device 3, which is protected by the SE 50, through the security level acquirer 61 of the API layer 60.

At step S102, the communicator 72 of the IoT device 3 transmits the security level of the IoT device 3, which is acquired at step S101 described above to the biometric authentication device 2.

At step S103, the communicator 32 of the biometric authentication device 2 receives the security level of the IoT device 3, which is transmitted at step S102 described above.

At step S104, the authenticator 31 of the biometric authentication device 2 acquires the biometric information of the user, which is protected by the SE 10, through the biometric information acquirer 21 of the API layer 20.

At step S105, the authenticator 31 of the biometric authentication device 2 performs biometric authentication of the user based on the biometric information acquired at step S104 described above. For example, when the biometric authentication device 2 is a smartphone having a function to acquire biometric information, the authenticator 31 compares the biometric information of the user, which is acquired by the smartphone, and the biometric information acquired at step S104 described above and determines whether or not the pieces of information match each other. When the pieces of information match each other, the authenticator 31 proceeds to processing at the next step S106. Although not illustrated in FIG. 2, the authenticator 31 stops the authentication processing in FIG. 2 when the pieces of information do not match each other.

At step S106, the authenticator 31 of the biometric authentication device 2 acquires the security level of the biometric authentication device 2, which is protected by the SE 10, through the security level acquirer 22 included in the API layer 20.

At step S107, the communicator 32 of the biometric authentication device 2 transmits the security level of the biometric authentication device 2, which is acquired at step S106 described above to the IoT device 3.

At step S108, the communicator 72 of the IoT device 3 receives the security level of the biometric authentication device 2, which is transmitted at step S107 described above.

At step S109, the authenticator 31 of the biometric authentication device 2 determines whether or not the security level of the IoT device 3, which is received at step 103 described above is equal to or larger than a predetermined threshold value.

When the security level of the IoT device 3 is equal to or larger than the predetermined threshold value (YES at S109), the authenticator 31 determines that the security level of the IoT device 3 satisfies a standard requested by the own device, and accepts the IoT device 3 (S110).

When the security level of the IoT device 3 is smaller than the predetermined threshold value (NO at S109), the authenticator 31 determines that the security level of the IoT device 3 does not satisfy the standard requested by the own device, rejects the IoT device 3, and stops the authentication processing (S111).

At step S112, the communicator 32 of the biometric authentication device 2 transmits the authentication result of acceptance or rejection to the IoT device 3.

At step S113, the communicator 72 of the IoT device 3 receives the authentication result transmitted from the biometric authentication device 2 at step S112 described above.

At step S114, the authenticator 71 of the IoT device 3 checks the authentication result received from the biometric authentication device 2 at step S113 described above.

When the authentication result received from the biometric authentication device 2 is rejection, the authenticator 71 stops the authentication processing (S115).

When the authentication result received from the biometric authentication device 2 is acceptance, the authenticator 71 performs operation setting of the IoT device 3 based on the security level of the biometric authentication device 2, which is received at step S103 described above (S116).

For example, when the security level of the biometric authentication device 2 is 3 (High), the authenticator 71 performs such operation setting that all functions of the IoT device 3 can be used. For example, when the security level of the biometric authentication device 2 is 1 (Low), the authenticator 71 restricts some functions of the IoT device 3. For example, when the security level of the biometric authentication device 2 is 0 (not supported), the authenticator 71 restricts all functions of the IoT device 3. In this case, the user cannot use the IoT device 3. When the operation setting of the IoT device 3 is completed, the authenticator 71 ends the authentication processing (END).

As described above, in the biometric authentication system 1 according to Approach 1, the biometric authentication device 2 performs authentication of the user based on the biometric information protected by the SE 10 and performs authentication of the IoT device 3 based on the security level received from the IoT device 3. The IoT device 3 performs authentication of the biometric authentication device 2 based on the security level received from the biometric authentication device 2.

With the characteristics as described above, each device in the biometric authentication system 1 according to Approach 1 can perform mutual authentication with taken into account the security level of the counterpart device.

The authenticator 71 of the IoT device 3 performs operation setting of the IoT device 3 based on the security level of the biometric authentication device 2. Accordingly, some or all functions of the IoT device 3 can be restricted in accordance with the security level of the biometric authentication device 2.

In the flowchart in FIG. 2, the processing does not necessarily need to be executed in the illustrated order. For example, the reception processing by the biometric authentication device 2 at step S103 may be executed at an optional timing between START and step S109. Similarly, the reception processing by the IoT device 3 at step 108 may be executed at an optional timing between START and step S114.

### Approach 2

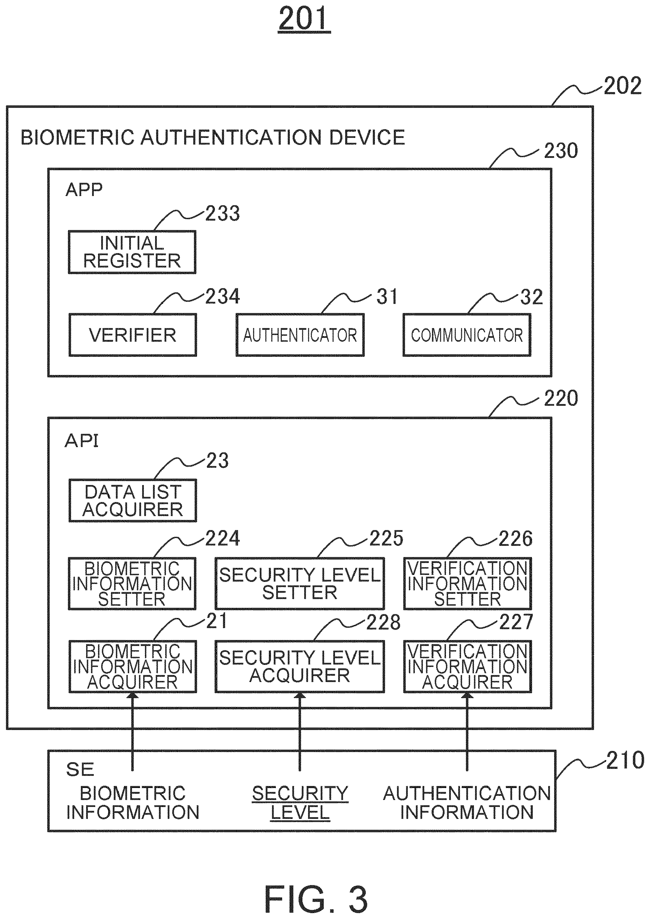

FIG. 3 is a diagram illustrating the configuration of a biometric authentication system 201 according to Approach 2. However, the configuration of the IoT device is the same as in Approach 1 and thus omitted in the drawing.

A biometric authentication device 202 has a configuration that a SE 210 is physically replaceable. Specific forms of the SE 210 are, for example, a removable chip such as a SIM, and an external device that can communicate with the biometric authentication device 202 by a USB or the like.

Data related to the biometric information, data related to a security level, and data related to verification information are encrypted and stored in a hardware manner in the SE 210. Similarly to Approach 1, biometric information protected by the SE 210 is the biometric information of a user.

The security level protected by the SE 210 is the security level of the SE 210. Although the security level protected by the SE 10 in Approach 1 is the security level of the biometric authentication device 2, the security level protected by the SE 210 in Approach 2 is the security level of the SE 210 itself. In Approach 2, the security level of the biometric authentication device 202 is stored in, for example, a ROM of the biometric authentication device 202.

The verification information is information for verifying validity of the biometric authentication device 202 when the biometric authentication device 202 is activated. For example, the verification information is information for verifying whether the firmware of the biometric authentication device 202 is falsified.

An API layer 220 of the biometric authentication device 202 includes a biometric information setter 224, a security level setter 225, a verification information setter 226, and a verification information acquirer 227 in addition to the APIs included in the API layer 20 in Approach 1. The API layer 220 also includes a security level acquirer 228 in place of the security level acquirer 22 of Approach 1. A security level acquired by the security level acquirer 228 is the security level of the SE 210.

The biometric information setter 224 writes data related to biometric information to the SE 210. The security level setter 225 writes data related to a security level to the SE 210. The verification information setter 226 writes data related to verification information to the SE 210. The verification information acquirer 227 reads the data related to the verification information and stored in the SE 210 and acquires the verification information based on the data related to the verification information.

An APP layer 230 of the biometric authentication device 202 includes an initial register 233 and a verifier 234 in addition to the modules included in the application layer 30 in Approach 1.

The initial register 233 causes the SE 210 to store data related to the biometric information of the user through the biometric information setter 224. The initial register 233 causes the SE 210 to store data related to the security level of the SE 210 through the security level setter 225. The initial register 233 causes the SE 210 to store data related to the verification information through the verification information setter 226. The verifier 234 verifies validity of the biometric authentication device 202 by using the verification information when the biometric authentication device 202 is activated, reactivated, and initialized.

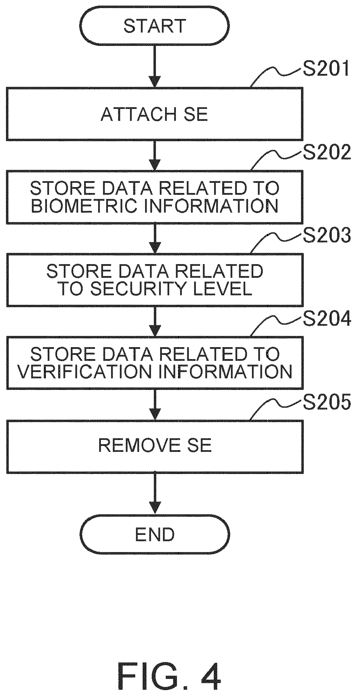

FIG. 4 is a flowchart for description of details of initial registration processing by the SE 210. At the start of the flowchart, no data may be stored in the SE 210.

At step S201, the SE 210 is physically attached to the biometric authentication device 202. This process is manually performed by the user or the like.

At step S202, the initial register 233 of the biometric authentication device 202 causes the SE 210 to store data related to the biometric information of the user through the biometric information setter 224 of the API layer 220. In this case, data is overwritten when data related to the biometric information of the user is already stored in the SE 210.

At step S203, the initial register 233 of the biometric authentication device 202 causes the SE 210 to store data related to the security level of the SE 210 through the security level setter 225 of the API layer 220. In this case, data is overwritten when data related to the security level is already stored in the SE 210.

At step S204, the initial register 233 of the biometric authentication device 202 causes the SE 210 to store data related to the verification information through the verification information setter 226 of the API layer 220. In this case, data is overwritten when data related to the verification information is already stored in the SE 210.

At step S205, the SE 210 is physically removed from the biometric authentication device 202. This process is manually performed by the user or the like.

Through the above-described processing, the initial registration processing by the SE 210 is completed.

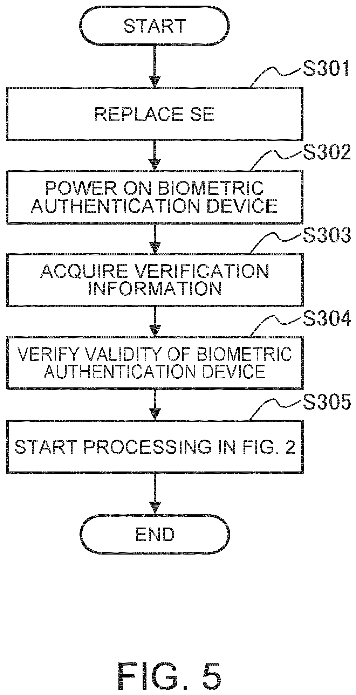

FIG. 5 is a flowchart for description of details of processing when the SE 210 is replaced while the biometric authentication device 202 is powered off. At the start of the flowchart, the above-described initial registration processing in FIG. 4 is completed, and data related to the biometric information, data related to the security level, and the verification information are already stored in the SE 210.

At step S301, the SE 210 already attached to the biometric authentication device 202 is removed and another SE 210 is newly attached. This process is manually performed by the user.

At step S302, the biometric authentication device 202 is powered on. This process is also manually performed by the user.

At step S303, the verifier 234 of the biometric authentication device 202 acquires the verification information from the SE 210 through the verification information acquirer 227 of the API layer 220.

At step S304, the verifier 234 of the biometric authentication device 202 verifies validity of the biometric authentication device 202 by using the verification information acquired at step S303 described above. For example, the verifier 234 verifies whether the firmware of the biometric authentication device 202 is falsified by using the verification information.

At step S305, the authenticator 31 of the biometric authentication device 202 starts the processing of the flowchart in FIG. 2 in Approach 1 already described. In this case, when transmitting the security level of the biometric authentication device 202 to the IoT device at step S107 in FIG. 2, the biometric authentication device 202 compares the security level of the biometric authentication device 202 and the security level of the SE 210 and transmits the lower security level to the IoT device.

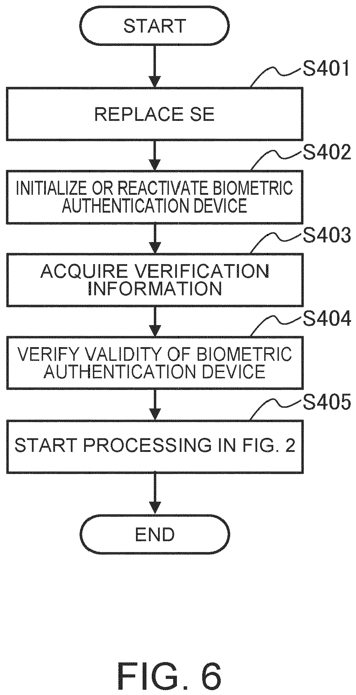

FIG. 6 is a flowchart for description of details of processing when the SE 210 is replaced while the biometric authentication device 202 is powered on. At the start of the flowchart, the above-described initial setting processing in FIG. 4 is completed, and data related to the biometric information, data related to the security level, and the verification information are already stored in the SE 210.

At step S401, the SE 210 already attached to the biometric authentication device 202 is removed and another SE 210 is newly attached. This process is manually performed by the user.

At step S402, when having sensed that the SE 210 is replaced, the biometric authentication device 202 initializes or reactivates itself.

At step S403, the verifier 234 of the biometric authentication device 202 acquires the verification information from the SE 210 through the verification information acquirer 227 of the API layer 220.

At step S404, the verifier 234 of the biometric authentication device 202 verifies validity of the biometric authentication device 202 by using the verification information acquired at step S303 described above. For example, the verifier 234 verifies whether the firmware of the biometric authentication device 202 is falsified by using the verification information.

At step S405, the authenticator 31 of the biometric authentication device 202 starts the processing of the flowchart in FIG. 2 in Approach 1 already described. In this case, at step S107 in FIG. 2, when transmitting the security level of the biometric authentication device 202 to the IoT device, the biometric authentication device 202 compares the security level of the biometric authentication device 202 and the security level of the SE 210 and transmits the lower security level to the IoT device.

As described above, the biometric authentication device 202 according to Approach 2 has a configuration that the SE 210 is replaceable. Accordingly, for example, one biometric authentication device 202 can be shared by a plurality of users.

### Approach 3

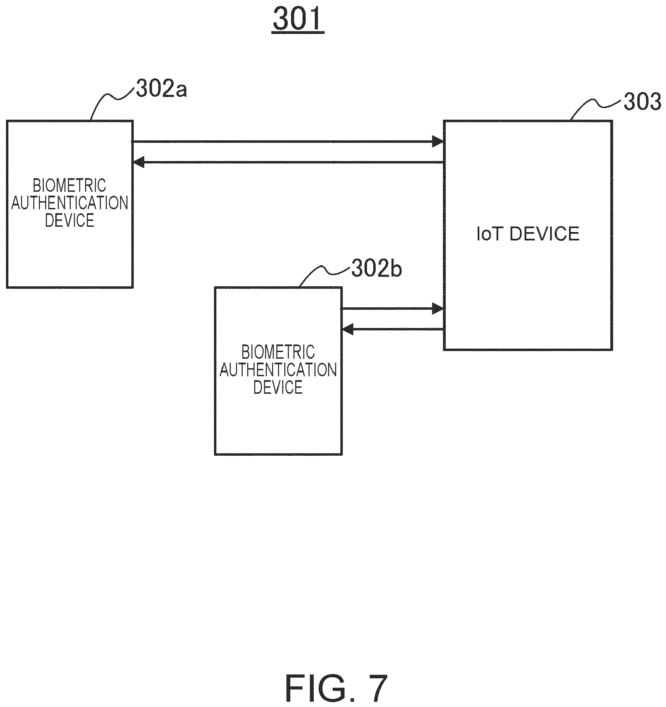

FIG. 7 is a diagram illustrating the configuration of a biometric authentication system 301 according to Approach 3. The biometric authentication system 301 includes two biometric authentication devices 302a and 302b and one IoT device 303.

For example, the biometric authentication device 302a is a security card brought with a user, and the biometric authentication device 302b is a camera-equipped authentication device installed nearby the IoT device 303. When the user uses the IoT device 303, mutual authentication is first performed between the biometric authentication device 302a and the IoT device 303, and then mutual authentication is performed between the biometric authentication device 302b and the IoT device 303. The strength of security can be improved by performing such two-stage authentication processing.

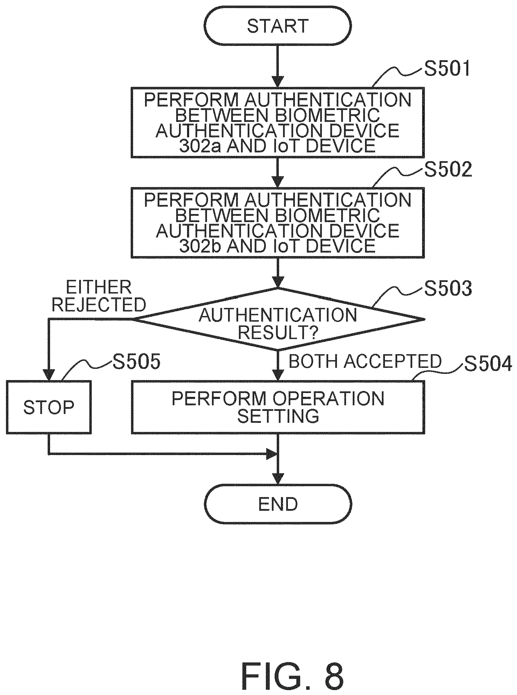

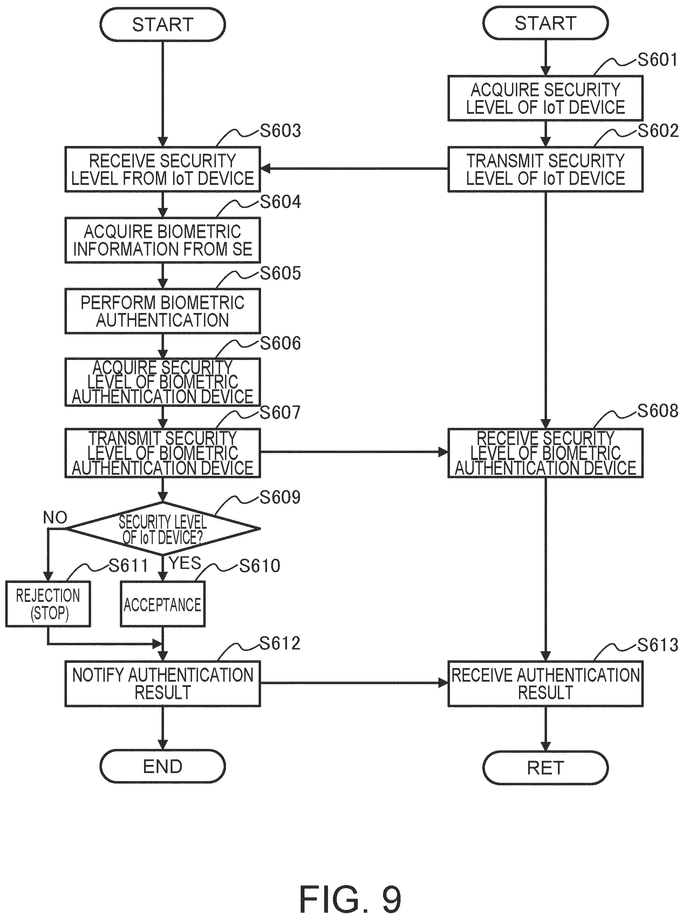

FIG. 8 is a flowchart for description of details of the two-stage authentication processing by the biometric authentication system 301. FIG. 9 is a flowchart for description of details of processing called from steps S501 and S502 in FIG. 8.

At step S501 in FIG. 8, mutual authentication processing is performed between the biometric authentication device 302a and the IoT device 303. Specifically, the processing illustrated in FIG. 9 is performed between the biometric authentication device 302a and the IoT device 303. Processing at steps S601 to S613 in FIG. 9 is the same as the processing at steps S101 to S113 in FIG. 2 in Approach 1 already described.

At step S502 in FIG. 8, mutual authentication processing is performed between the biometric authentication device 302b and the IoT device 303. Specifically, the processing illustrated in FIG. 9 is performed between the biometric authentication device 302b and the IoT device 303.

At step 503 in FIG. 8, the IoT device 303 checks an authentication result received from the biometric authentication device 302a and an authentication result received from the biometric authentication device 302b, and only when both results indicate acceptance, the IoT device 303 performs operation setting of the own device based on the lower one of the security levels of the biometric authentication devices 302a and 302b.

As described above, the biometric authentication system 301 according to Approach 3 includes the two biometric authentication devices 302a and 302b. The IoT device 303 performs authentication of the biometric authentication device 302a based on the security level of the biometric authentication device 302a, and performs authentication of the biometric authentication device 302b based on the security level of the biometric authentication device 302b. In this case, the security level is communicated between the biometric authentication device 302a and the IoT device 303, and the security level is communicated between the biometric authentication device 302b and the IoT device 303.

With the characteristics as described above, the strength of security in the biometric authentication system 301 according to Approach 3 improves as compared to a case in which only one biometric authentication device is used. As a matter of course, the number of biometric authentication devices 302 may be equal to or larger than three.

### Approach 4

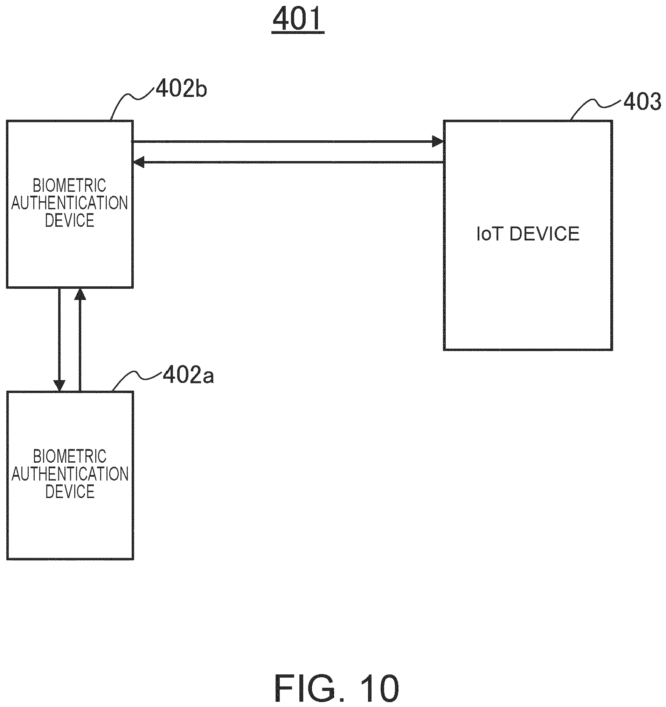

FIG. 10 is a diagram illustrating the configuration of a biometric authentication system 401 according to Approach 4. The biometric authentication system 401 includes two biometric authentication devices 402a and 402b and one IoT device 403.

For example, the biometric authentication device 402a is a security card brought with a user, and the biometric authentication device 402b is an authentication device having an insertion port for a security card. When the user uses the IoT device 403, mutual authentication processing is first performed between the biometric authentication device 402a and the biometric authentication device 402b, and then mutual authentication processing is performed between the biometric authentication device 402b and the IoT device 403. The strength of security can be improved by performing such two-stage authentication processing.

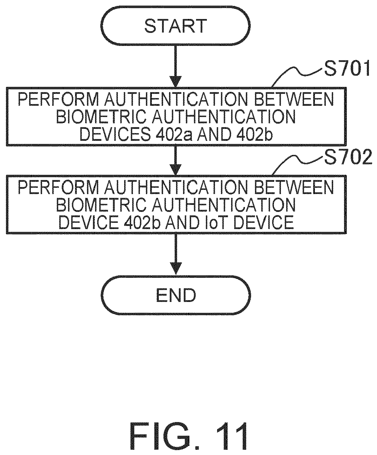

FIG. 11 is a flowchart for description of details of the two-stage authentication processing by the biometric authentication system 401.

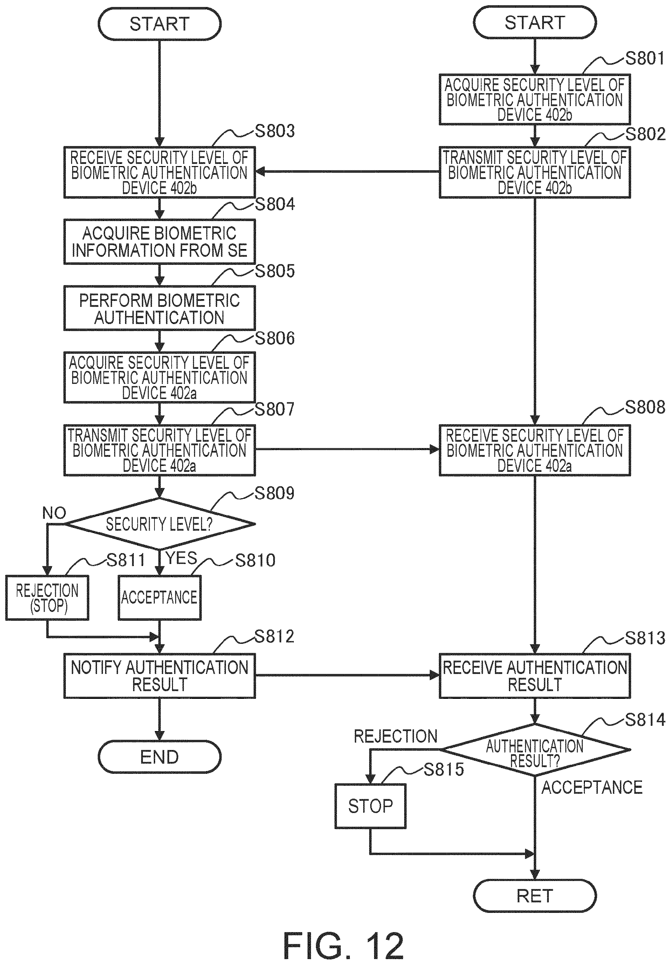

At step S701 in FIG. 11, mutual authentication processing is performed between the biometric authentication device 402a and the biometric authentication device 402b. Specifically, processing of a flowchart in FIG. 12 is performed.

At step S801 in FIG. 12, the biometric authentication device 402b acquires the security level of the biometric authentication device 402b, which is protected by a SE.

At step S802, the biometric authentication device 402b transmits the security level of the biometric authentication device 402b, which is acquired at step S801 described above to the biometric authentication device 402a.

At step S803, the biometric authentication device 402a receives the security level of the biometric authentication device 402b, which is transmitted at step S802 described above.

At step S804, the biometric authentication device 402a acquires the biometric information of the user, which is protected by a SE.

At step S805, the biometric authentication device 402a performs biometric authentication of the user based on the biometric information acquired at step S804 described above.

At step S806, the biometric authentication device 402a acquires the security level of the biometric authentication device 402a, which is protected by the SE.

At step S807, the biometric authentication device 402a transmits the security level of the biometric authentication device 402a, which is acquired at step S806 described above to the biometric authentication device 402b.

At step S808, the biometric authentication device 402b receives the security level of the biometric authentication device 402a, which is transmitted at step S807 described above.

At step S809, the biometric authentication device 402a determines whether or not the security level of the biometric authentication device 402b, which is received at step S803 described above is equal to or larger than a predetermined threshold value.

When the security level of the biometric authentication device 402b is equal to or larger than the predetermined threshold value (YES at S809), the biometric authentication device 402a determines that the security level of the biometric authentication device 402b satisfies a standard requested by the own device, and accepts the biometric authentication device 402b (S810).

When the security level of the biometric authentication device 402b is smaller than the predetermined threshold value (NO at S809), the biometric authentication device 402a determines that the security level of the biometric authentication device 402b does not satisfy the standard requested by the own device, rejects the biometric authentication device 402b, and stops the authentication processing (S811).

At step S812, the biometric authentication device 402a transmits the authentication result of acceptance or rejection to the biometric authentication device 402b.

At step S813, the biometric authentication device 402b receives the authentication result transmitted from the biometric authentication device 402a at step S812 described above.

At step S814, the biometric authentication device 402b checks the authentication result received from the biometric authentication device 402a at step S813 described above.

When the authentication result received from the biometric authentication device 402a is rejection, the biometric authentication device 402b stops the authentication processing (S815).

When the authentication result received from the biometric authentication device 402a is acceptance, the biometric authentication device 402b proceeds to step S702 in FIG. 11.

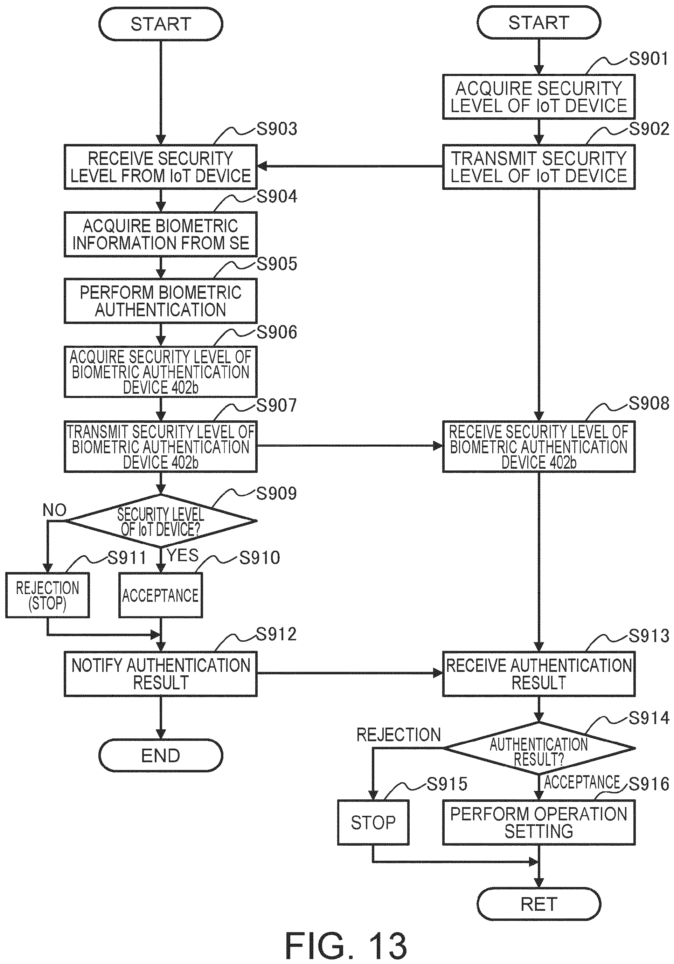

At step S702 in FIG. 11, mutual authentication processing is performed between the biometric authentication device 402b and the IoT device 403. Specifically, processing of a Flowchart in FIG. 13 is performed.

At step S901 in FIG. 13, the IoT device 403 acquires the security level of the IoT device 403, which is protected by a SE.

At step S902, the IoT device 403 transmits the security level of the IoT device 403, which is acquired at step S901 described above to the biometric authentication device 402b.

At step S903, the biometric authentication device 402b receives the security level of the IoT device 403, which is transmitted at step S902 described above.

At step S904, the biometric authentication device 402b acquires the biometric information of the user, which is protected by a SE.

At step S905, the biometric authentication device 402b performs biometric authentication of the user based on the biometric information acquired at step S904 described above.

At step S906, the biometric authentication device 402b acquires the security level of the biometric authentication device 402b, which is protected by a SE.

At step S907, the biometric authentication device 402b transmits the security level of the biometric authentication device 402b, which is acquired at step S906 described above to the IoT device 403.

At step S908, the IoT device 403 receives the security level of the biometric authentication device 402b, which is transmitted at step S907 described above.

At step S909, the biometric authentication device 402b determines whether or not the security level of the IoT device 403, which is received at step 903 described above is equal to or larger than a predetermined threshold value.

When the security level of the IoT device 403 is equal to or larger than the predetermined threshold value (YES at S909), the biometric authentication device 402b determines that the security level of the IoT device 403 satisfies a standard requested by the own device, and accepts the IoT device 403 (S910).

When the security level of the IoT device 403 is smaller than the predetermined threshold value (NO at S909), the biometric authentication device 402b determines that the security level of the IoT device 403 does not satisfy the standard requested by the own device, rejects the IoT device 403, and stops the authentication processing (S911).

At step S912, the biometric authentication device 402b transmits the authentication result of acceptance or rejection to the IoT device 403.

At step S913, the IoT device 403 receives the authentication result transmitted from the biometric authentication device 402b at step S912 described above.

At step S914, the IoT device 403 checks the authentication result received from the biometric authentication device 402b at step S913 described above.

When the authentication result received from the biometric authentication device 402b is rejection, the IoT device 403 stops the authentication processing (S915).

When the authentication result received from the biometric authentication device 402b is acceptance, the IoT device 403 performs operation setting of the IoT device 403 based on the security level of the biometric authentication device 402b, which is received at step S903 described above (S916). When the operation setting of the IoT device 403 is completed, the IoT device 403 returns to FIG. 11 and ends the authentication processing (END).

As described above, the biometric authentication system 401 according to Approach 4 includes the two biometric authentication devices 402a and 402b. The biometric authentication device 402b performs authentication of the biometric authentication device 402a based on the security level of the biometric authentication device 402a. The IoT device 403 performs authentication of the biometric authentication device 402b based on the security level of the biometric authentication device 402b. In this case, the security level is communicated between the biometric authentication device 402a and the biometric authentication device 402b, and the security level is communicated between the biometric authentication device 402b and the IoT device 403.

With the characteristics as described above, the strength of security in the biometric authentication system 401 according to Approach 4 improves as compared to a case in which only one biometric authentication device is used. As a matter of course, the number of biometric authentication devices 402 may be equal to or larger than three.

While certain arrangements have been described, these arrangements have been presented by way of example only, and are not intended to limit the scope of the inventions. Indeed, the apparatuses* described herein may be embodied in a variety of other forms; furthermore various omissions, substitutions and changes in the form of the apparatuses described herein may be made.

The approaches as described before may be configured as below.

### (Clauses)

Clause 1.(Approaches 1 to 4) A biometric authentication system comprising a biometric authentication device and an information processing device, wherein
the biometric authentication device includes
   a first memory comprising a first secure element configured to store data related to biometric information and data related to a first security level,
   a first processing circuitry comprising
      a biometric information acquirer configured to read the data related to the biometric information from the first secure element and acquire the biometric information based on the data related to the biometric information,
      a first security level acquirer configured to read the data related to the first security level from the first secure element and acquire the first security level based on the data related to the first security level,
      a first communicator configured to transmit the first security level to the information processing device and receive a second security level from the information processing device, and
      a first authenticator configured to perform authentication of a user based on the biometric information and perform authentication of the information processing device based on the second security level, and
the information processing device includes
   a second memory comprising a second secure element configured to store data related to the second security level,
   a second processing circuitry comprising
      a second security level acquirer configured to read the data related to the second security level from the second secure element and acquire the second security level based on the data related to the second security level,
      a second communicator configured to transmit the second security level to the biometric authentication device and receive the first security level from the biometric authentication device, and
      a second authenticator configured to perform authentication of the biometric authentication device based on the first security level.

Clause 2. (Approaches 1 to 4) The biometric authentication system according to clause 1, wherein the first authenticator of the biometric authentication device accepts the information processing device when the second security level is equal to or larger than a predetermined threshold value, and rejects the information processing device when the second security level is smaller than the predetermined threshold value.

Clause 3. (Approaches 1 to 4) The biometric authentication system according to clause 2, wherein the first communicator of the biometric authentication device transmits an authentication result of the information processing device to the information processing device.

Clause 4. (Approaches 1 to 4) The biometric authentication system according to clause 3, wherein the second authenticator of the information processing device performs operation setting of the information processing device based on the first security level.

Clause 5. (Approaches 1 to 4) The biometric authentication system according to clause 4, wherein the second authenticator of the information processing device restricts some or all functions of the information processing device based on the first security level.

Clause 6. (Approaches 1 to 4) The biometric authentication system according to one of clauses 1 to 5, wherein the biometric information acquirer, the first security level acquirer, and the second security level acquirer are each implemented as an API.

Clause 7. (Approach 2) The biometric authentication system according to one of clauses 1 to 6, wherein the biometric authentication device has a configuration that the first secure element is replaceable.

Clause 8. (Approach 2) The biometric authentication system according to clause 7, wherein the biometric authentication device further includes
a biometric information setter configured to write the data related to the biometric information to the first secure element,
a first security level setter configured to write the data related to the first security level to the first secure element,
a verification information setter configured to write data related to verification information to the first secure element,
a verification information acquirer configured to read the data related to the verification information from the first secure element and acquire the verification information based on the data related to the verification information, and
a verifier configured to verify validity of the biometric authentication device by using the verification information.

Clause 9. (Approach 2) The biometric authentication system according to clause 8, wherein the verifier of the biometric authentication device verifies validity of the biometric authentication device by using the verification information when the biometric authentication device is powered on.

Clause 10. (Approach 2) The biometric authentication system according to clause 8, wherein
the biometric authentication device is initialized or reactivated when the first secure element is replaced while the biometric authentication device is powered on, and
the verifier of the biometric authentication device verifies validity of the biometric authentication device by using the verification information when the biometric authentication device is initialized or reactivated.

Clause 11. (Approach 2) The biometric authentication system according to one of clauses 8 to 10, wherein the biometric authentication setter, the first security level setter, the verification information setter, and the verification information acquirer are each implemented as an API.

Clause 12. (Approach 3) The biometric authentication system according to one of clauses 1 to 11, wherein
the biometric authentication device includes a first biometric authentication device and a second biometric authentication device, and
the second authenticator of the information processing device performs authentication of the first biometric authentication device based on the first security level of the first biometric authentication device and performs authentication of the second biometric authentication device based on the first security level of the second biometric authentication device.

Clause 13. (Approach 4) The biometric authentication system according to one of clauses 1 to 11, wherein
the biometric authentication device includes a first biometric authentication device and a second biometric authentication device,
the first authenticator of the second biometric authentication device performs authentication of the first biometric authentication device based on the first security level of the first biometric authentication device, and
the second authenticator of the information processing device performs authentication of the second biometric authentication device based on the first security level of the second biometric authentication device.

Clause 14. A biometric authentication device comprising:
a memory comprising a first secure element configured to store data related to biometric information and data related to a first security level;
a processing circuitry comprising
   a biometric information acquirer configured to read the data related to the biometric information from the first secure element and acquire the biometric information based on the data related to the biometric information;
   a first security level acquirer configured to read the data related to the first security level from the first secure element and acquire the first security level based on the data related to the first security level;
   a first communicator configured to transmit the first security level to information processing device and receive a second security level from the information processing device; and
   a first authenticator configured to perform authentication of a user based on the biometric information and perform authentication of the information processing device based on the second security level.

Clause 15. A biometric authentication method comprising:
reading data related to biometric information from a first secure element and acquiring the biometric information based on the data related to the biometric information;
reading data related to a first security level from the first secure element and acquiring the first security level based on the data related to the first security level;
transmitting the first security level to an information processing device;
receiving a second security level from the information processing device;
performing authentication of a user based on the biometric information; and
performing authentication of the information processing device based on the second security level.

## Claims

1. A biometric authentication system comprising a biometric authentication device and an information processing device, wherein
the biometric authentication device includes
a first memory comprising a first secure element configured to store data related to biometric information and data related to a first security level,
a first processing circuitry comprising
a biometric information acquirer configured to read the data related to the biometric information from the first secure element and acquire the biometric information based on the data related to the biometric information,
a first security level acquirer configured to read the data related to the first security level from the first secure element and acquire the first security level based on the data related to the first security level,
a first communicator configured to transmit the first security level to the information processing device and receive a second security level from the information processing device, and
a first authenticator configured to perform authentication of a user based on the biometric information and perform authentication of the information processing device based on the second security level, and
the information processing device includes
a second memory comprising a second secure element configured to store data related to the second security level,
a second processing circuitry comprising
a second security level acquirer configured to read the data related to the second security level from the second secure element and acquire the second security level based on the data related to the second security level,
a second communicator configured to transmit the second security level to the biometric authentication device and receive the first security level from the biometric authentication device, and
a second authenticator configured to perform authentication of the biometric authentication device based on the first security level.

2. The biometric authentication system according to claim 1, wherein the first authenticator of the biometric authentication device accepts the information processing device when the second security level is equal to or larger than a predetermined threshold value, and rejects the information processing device when the second security level is smaller than the predetermined threshold value.

3. The biometric authentication system according to claim 2, wherein the first communicator of the biometric authentication device transmits an authentication result of the information processing device to the information processing device.

4. The biometric authentication system according to claim 3, wherein the second authenticator of the information processing device performs operation setting of the information processing device based on the first security level.

5. The biometric authentication system according to claim 4, wherein the second authenticator of the information processing device restricts some or all functions of the information processing device based on the first security level.

6. The biometric authentication system according to one of claims 1 to 5, wherein the biometric information acquirer, the first security level acquirer, and the second security level acquirer are each implemented as an API.

7. The biometric authentication system according to one of claims 1 to 6, wherein the biometric authentication device has a configuration that the first secure element is replaceable.

8. The biometric authentication system according to claim 7, wherein the biometric authentication device further includes
a biometric information setter configured to write the data related to the biometric information to the first secure element,
a first security level setter configured to write the data related to the first security level to the first secure element,
a verification information setter configured to write data related to verification information to the first secure element,
a verification information acquirer configured to read the data related to the verification information from the first secure element and acquire the verification information based on the data related to the verification information, and
a verifier configured to verify validity of the biometric authentication device by using the verification information.

9. The biometric authentication system according to claim 8, wherein the verifier of the biometric authentication device verifies validity of the biometric authentication device by using the verification information when the biometric authentication device is powered on.

10. The biometric authentication system according to claim 8, wherein
the biometric authentication device is initialized or reactivated when the first secure element is replaced while the biometric authentication device is powered on, and
the verifier of the biometric authentication device verifies validity of the biometric authentication device by using the verification information when the biometric authentication device is initialized or reactivated.

11. The biometric authentication system according to one of claims 8 to 10, wherein the biometric authentication setter, the first security level setter, the verification information setter, and the verification information acquirer are each implemented as an API.

12. The biometric authentication system according to one of claims 1 to 11, wherein
the biometric authentication device includes a first biometric authentication device and a second biometric authentication device, and
the second authenticator of the information processing device performs authentication of the first biometric authentication device based on the first security level of the first biometric authentication device and performs authentication of the second biometric authentication device based on the first security level of the second biometric authentication device.

13. The biometric authentication system according to one of claims 1 to 11, wherein
the biometric authentication device includes a first biometric authentication device and a second biometric authentication device,
the first authenticator of the second biometric authentication device performs authentication of the first biometric authentication device based on the first security level of the first biometric authentication device, and
the second authenticator of the information processing device performs authentication of the second biometric authentication device based on the first security level of the second biometric authentication device.

14. A biometric authentication device comprising:
a memory comprising a first secure element configured to store data related to biometric information and data related to a first security level;
a processing circuitry comprising
a biometric information acquirer configured to read the data related to the biometric information from the first secure element and acquire the biometric information based on the data related to the biometric information;
a first security level acquirer configured to read the data related to the first security level from the first secure element and acquire the first security level based on the data related to the first security level;
a first communicator configured to transmit the first security level to information processing device and receive a second security level from the information processing device; and
a first authenticator configured to perform authentication of a user based on the biometric information and perform authentication of the information processing device based on the second security level.

15. A biometric authentication method comprising:
reading data related to biometric information from a first secure element and acquiring the biometric information based on the data related to the biometric information;
reading data related to a first security level from the first secure element and acquiring the first security level based on the data related to the first security level;
transmitting the first security level to an information processing device;
receiving a second security level from the information processing device;
performing authentication of a user based on the biometric information; and
performing authentication of the information processing device based on the second security level.

## Amended claims

### Amended claims in accordance with Rule 137(2) EPC.

1. A biometric authentication system comprising a biometric authentication device (2, 202, 302a, 302b, 402a, 402b) and an information processing device, wherein
the biometric authentication device (2, 202, 302a, 302b, 402a, 402b) includes
a first memory comprising a first secure element (10, 210) configured to store data related to biometric information and data related to a first security level,
a first processing circuitry comprising
a biometric information acquirer (21) configured to read the data related to the biometric information from the first secure element (10, 210) and acquire the biometric information based on the data related to the biometric information,
a first security level acquirer (22, 228) configured to read the data related to the first security level from the first secure element (10, 210) and acquire the first security level based on the data related to the first security level,
a first communicator (32) configured to transmit the first security level to the information processing device and receive a second security level from the information processing device, and
a first authenticator (31) configured to perform authentication of a user based on the biometric information and perform authentication of the information processing device based on the second security level, and
the information processing device includes
a second memory comprising a second secure element (50) configured to store data related to the second security level,
a second processing circuitry comprising
a second security level acquirer (61) configured to read the data related to the second security level from the second secure element (50) and acquire the second security level based on the data related to the second security level,
a second communicator (72) configured to transmit the second security level to the biometric authentication device (2, 202, 302a, 302b, 402a, 402b) and receive the first security level from the biometric authentication device (2, 202, 302a, 302b, 402a, 402b), and
a second authenticator (71) configured to perform authentication of the biometric authentication device (2, 202, 302a, 302b, 402a, 402b) based on the first security level;
wherein the biometric authentication device (2, 202, 302a, 302b, 402a, 402b) has a configuration that the first secure element is replaceable,
the biometric authentication device (2, 202, 302a, 302b, 402a, 402b) further comprises:
a biometric information setter (224) configured to write the data related to the biometric information to the first secure element (10, 210),
a first security level setter (225) configured to write the data related to the first security level to the first secure element (10, 210),
a verification information setter (226) configured to write data related to verification information to the first secure element (10, 210),
a verification information acquirer (227) configured to read the data related to the verification information from the first secure element (10, 210) and acquire the verification information based on the data related to the verification information, and
a verifier (234) configured to verify validity of the biometric authentication device (2, 202, 302a, 302b, 402a, 402b) by using the verification information,
the biometric authentication device (2, 202, 302a, 302b, 402a, 402b) is initialized or reactivated when the first secure element (10, 210) is replaced while the biometric authentication device (2, 202, 302a, 302b, 402a, 402b) is powered on, and
the verifier of the biometric authentication device (2, 202, 302a, 302b, 402a, 402b) verifies validity of the biometric authentication device (2, 202, 302a, 302b, 402a, 402b) by using the verification information when the biometric authentication device (2, 202, 302a, 302b, 402a, 402b) is initialized or reactivated.

2. The biometric authentication system according to claim 1, wherein the first authenticator (31) of the biometric authentication device (2, 202, 302a, 302b, 402a, 402b) accepts the information processing device when the second security level is equal to or larger than a predetermined threshold value, and rejects the information processing device when the second security level is smaller than the predetermined threshold value.

3. The biometric authentication system according to claim 2, wherein the first communicator (32) of the biometric authentication device (2, 202, 302a, 302b, 402a, 402b) transmits an authentication result of the information processing device to the information processing device.

4. The biometric authentication system according to claim 3, wherein the second authenticator (71) of the information processing device performs operation setting of the information processing device based on the first security level.

5. The biometric authentication system according to claim 4, wherein the second authenticator (71) of the information processing device restricts some or all functions of the information processing device based on the first security level.

6. The biometric authentication system according to one of claims 1 to 5, wherein the biometric information acquirer (21), the first security level acquirer (22, 228), and the second security level acquirer (61) are each implemented as an API.

7. The biometric authentication system according to claim 1, wherein the biometric authentication setter (224), the first security level setter (225), the verification information setter (226), and the verification information acquirer (227) are each implemented as an API.

8. The biometric authentication system according to one of claims 1 to 7, wherein
the biometric authentication device includes a first biometric authentication device (302a) and a second biometric authentication device (302b), and
the second authenticator (71) of the information processing device performs authentication of the first biometric authentication device (302a) based on the first security level of the first biometric authentication device (302a) and performs authentication of the second biometric authentication device (302b) based on the first security level of the second biometric authentication device (302b).

9. The biometric authentication system according to one of claims 1 to 7, wherein
the biometric authentication device includes a first biometric authentication device (402a) and a second biometric authentication device (402b),
the first authenticator (31) of the second biometric authentication device (402b) performs authentication of the first biometric authentication device (402a) based on the first security level of the first biometric authentication device (402a), and
the second authenticator (71) of the information processing device performs authentication of the second biometric authentication device (402b) based on the first security level of the second biometric authentication device (402b).

10. A biometric authentication device (2, 202, 302a, 302b, 402a, 402b) comprising:
a memory comprising a first secure element (10, 210) configured to store data related to biometric information and data related to a first security level;
a processing circuitry comprising
a biometric information acquirer (21) configured to read the data related to the biometric information from the first secure element (10, 210) and acquire the biometric information based on the data related to the biometric information;
a first security level acquirer (22, 228) configured to read the data related to the first security level from the first secure element (10, 210) and acquire the first security level based on the data related to the first security level;
a first communicator (32) configured to transmit the first security level to information processing device and receive a second security level from the information processing device; and
a first authenticator (31) configured to perform authentication of a user based on the biometric information and perform authentication of the information processing device based on the second security level;
wherein the biometric authentication device (2, 202, 302a, 302b, 402a, 402b) has a configuration that the first secure element is replaceable,
the biometric authentication device (2, 202, 302a, 302b, 402a, 402b) further comprises:
a biometric information setter (224) configured to write the data related to the biometric information to the first secure element (10, 210),
a first security level setter (225) configured to write the data related to the first security level to the first secure element (10, 210),
a verification information setter (226) configured to write data related to verification information to the first secure element (10, 210),
a verification information acquirer (227) configured to read the data related to the verification information from the first secure element (10, 210) and acquire the verification information based on the data related to the verification information, and
a verifier (234) configured to verify validity of the biometric authentication device (2, 202, 302a, 302b, 402a, 402b) by using the verification information,
the biometric authentication device (2, 202, 302a, 302b, 402a, 402b) is initialized or reactivated when the first secure element (10, 210) is replaced while the biometric authentication device (2, 202, 302a, 302b, 402a, 402b) is powered on, and
the verifier of the biometric authentication device (2, 202, 302a, 302b, 402a, 402b) verifies validity of the biometric authentication device (2, 202, 302a, 302b, 402a, 402b) by using the verification information when the biometric authentication device (2, 202, 302a, 302b, 402a, 402b) is initialized or reactivated.

11. A biometric authentication method comprising:
reading data related to biometric information from a first secure element (10, 210) in a biometric authentication device (2, 202, 302a, 302b, 402a, 402b) and acquiring the biometric information based on the data related to the biometric information;
reading data related to a first security level from the first secure element (10, 210) and acquiring the first security level based on the data related to the first security level;
transmitting the first security level to an information processing device;
receiving a second security level from the information processing device;
performing authentication of a user based on the biometric information; and
performing authentication of the information processing device based on the second security level;
wherein the biometric authentication device (2, 202, 302a, 302b, 402a, 402b) has a configuration that the first secure element (10, 210) is replaceable,
the biometric authentication method further comprises:
writing the data related to the biometric information to the first secure element (10, 210),
writing the data related to the first security level to the first secure element (10, 210),
writing data related to verification information to the first secure element (10, 210),
reading the data related to the verification information from the first secure element (10, 210) and acquiring the verification information based on the data related to the verification information, and
verifying validity of the biometric authentication device (2, 202, 302a, 302b, 402a, 402b) by using the verification information, initializing or reactivating the biometric authentication device (2, 202, 302a, 302b, 402a, 402b) when the first secure element (10, 210) is replaced while the biometric authentication device (2, 202, 302a, 302b, 402a, 402b) is powered on, and
verifying validity of the biometric authentication device (2, 202, 302a, 302b, 402a, 402b) by using the verification information when the biometric authentication device (2, 202, 302a, 302b, 402a, 402b) is initialized or reactivated.
